# EUROPÄISCHE PATENTSCHRIFT

(11) **EP 3 672 044 B1**
(45) Veröffentlichungstag und Bekanntmachung des Hinweises auf die Patenterteilung: **22.05.2024**
(21) Anmeldenummer: 18213984.0
(22) Anmeldetag: 19.12.2018
(51) Int. Cl.: H02K 41/00, H02K 15/00

(54) **LINEARMOTORSYSTEM SOWIE SCHNITTSTELLENVORRICHTUNG FÜR EINEN LINEARMOTOR**
LINEAR MOTOR SYSTEM AND INTERFACE DEVICE FOR A LINEAR MOTOR
SYSTÈME DE MOTEUR LINÉAIRE AINSI QUE DISPOSITIF D'INTERFACE POUR UN MOTEUR LINÉAIRE

(43) Veröffentlichungstag der Anmeldung: 24.06.2020
(73) Patentinhaber: ETEL S.A., 2112 Môtiers (CH)
(72) Erfinder: MOTTIER, Samuel, 2000 Neuchatel (CH); MOREL, Jean-Pierre, 25300 Les Fourgs (FR)
(74) Vertreter: Maikowski & Ninnemann Patentanwälte Partnerschaft mbB

(56) Entgegenhaltungen:
- DE-A1- 19 839 334
- DE-A1- 19 939 207
- JP-U- S62 115 780
- JP-Y2- H 043 588

## Beschreibung

Diese Schrift betrifft Ausführungsformen einer Schnittstellenvorrichtung für einen Linearmotor, insbesondere zum lösbaren Befestigen eines Primärteils eines Linearmotors an einem Laufwagen. Diese Schrift betrifft außerdem Ausführungsformen eines Linearmotorsystems, eines Laufwagens, eines Laufwagensystems und eines Verfahrens.

Linearmotoren werden z.B. eingesetzt, wenn eine hochgenaue und gegebenenfalls auch schnelle Positionierung von Objekten, wie zum Beispiel eines Maschinenteiles einer Werkzeugmaschine, angestrebt wird. Im Gegensatz zu einem konventionellen Rotationsmotor entfällt dabei bei Linearmotoren die Notwendigkeit eines zwischen dem Linearmotor und dem anzutreibenden Objekt angeordneten Getriebes. Dabei kann ein Primärteil des Linearmotors an der Unterseite eines Laufwagens befestigt sein, der das zu bewegende Maschinenteil oder ein sonstiges Objekt trägt. Eine Bewegung des Laufwagens erfolgt dabei auf Schienen oder einer anderweitigen Linearführung. Ein Sekundärteil des Linearmotors, das typischerweise eine Magnetbahn umfasst, ist dabei entlang der Linearführung ortsfest angeordnet, derart dass eine magnetische Wechselwirkung zwischen dem Primärteil und dem Sekundärteil zum Antrieb des Laufwagens erfolgen kann. Ein Linearmotor ist beispielsweise in der US 8,030,804 B2 beschrieben.

Bei bekannten Linearmotorsystemen ist das Primärteil des Linearmotors hängend an der Unterseite des Laufwagens befestigt. Dazu ist das Primärteil beispielsweise von oben mit einer Traverse des Laufwagens verschraubt. Gleichzeitig ist in üblichen Applikationen ein mit dem Laufwagen zu bewegendes Objekt, wie etwa eine Werkzeugmaschine, auf eine Oberseite des Laufwagens gestützt angeordnet.

Problematisch ist in diesem Zusammenhang, dass ein Entfernen oder Anbringen des Primärteils von bzw. an dem Laufwagen, beispielsweise zu Austausch- oder Wartungszwecken, einen Zugriff auf die Primärteilbefestigung von oben erfordert. Dies ist oft mit erheblichem Aufwand verbunden. Insbesondere ist es in den meisten Fällen erforderlich, zunächst die Werkzeugmaschine oder das zu bewegende Objekt von der Oberseite des Laufwagens zu entfernen.

In der DE 199 39 207 A1 ist ein Linearantrieb beschrieben, bestehend aus einem an einem Schlitten anordenbaren Primärteil, wobei der Schlitten auf einem Führungssystem verschiebbar ist, sowie aus einem ortsfesten Sekundärteil, welcher mit dem Primärteil derart zusammenwirkt, dass der Schlitten auf dem Führungssystem bewegbar ist. Der Primärteil ist vom Schlitten trennbar und auf einer Lagerung relativ zum Schlitten bewegbar. Der Primärteil ist beispielsweise durch Schrauben von unten her an den Schlitten befestigbar.

In der DE 198 39 334 A1 ist eine Antriebseinheit für eine Maschine, vorzugsweise eine Bearbeitungsmaschine, beschrieben. Die Antriebseinheit hat ein Antriebssystem, vorzugsweise einen Lineardirektantrieb, der einen Schlitten aufweist, welcher längs einer Führung verfahrbar ist. Um die Antriebseinheit so auszubilden, daß sie durch ihre Eigenschaften und Formen für unterschiedliche Anwendungen mit konzentrierter Krafteinleitung eingesetzt werden kann, ist der Schlitten ein bewegungsausführendes Element, das von wenigstens einem lastaufnehmenden Schlittenteil mechanisch entkoppelt ist.

Aus der JP S62 115780 U 23 ist eine Schnittstellenvorrichtung mit Merkmalen des Oberbegriffs des Anspruchs 1 bekannt.

Es ist Aufgabe der vorliegenden Erfindung, eine verbesserte lösbare Befestigung für einen Linearmotor vorzuschlagen, die auf vorteilhafte Weise die vorgenannten Nachteile vermeidet.

Hiervon ausgehend wird vorliegend eine Schnittstellenvorrichtung gemäß dem unabhängigen Anspruch 1 zum lösbaren Befestigen eines Primärteils eines Linearmotors an einem Laufwagen vorgeschlagen. Merkmale einiger Ausführungsbeispiele sind in den Unteransprüchen angegeben. Die Merkmale der Unteransprüche können miteinander zur Ausbildung weiterer Ausführungsformen kombiniert werden, sofern nicht ausdrücklich etwas anderes angegeben ist.

Gemäß einem ersten Aspekt umfasst eine solche Schnittstellenvorrichtung einen Anbringungsabschnitt zum Anbringen eines Primärteils eines Linearmotors an der Schnittstellenvorrichtung. Die Schnittstellenvorrichtung umfasst zudem wenigstens einen Einsetzabschnitt, der zum Einsetzen in einen Aufnahmeabschnitt eines Laufwagens entlang einer axialen Richtung des Linearmotors ausgebildet ist, und wenigstens eine Blockierungsvorrichtung zum lösbaren Blockieren des Einsetzabschnitts in dem Aufnahmeabschnitt des Laufwagens.

Die axiale Richtung kann parallel zu einer Antriebsrichtung des Linearmotors verlaufen.

Die Blockierungsvorrichtung kann wenigstens eines aus einem Keil, einer Feder, einem Magnet und einer Hydraulik umfassen. Zudem kann die Blockierungsvorrichtung dazu ausgebildet sein, den Einsetzabschnitt durch Verklemmen in dem Aufnahmeabschnitt des Laufwagens zu blockieren.

Die Blockierungsvorrichtung umfasst wenigstens einen Keil und wenigstens eine Schraube, die in Bezug auf die Schnittstellenvorrichtung beweglich angeordnet sind. Dabei sind der Keil und die Schraube derart angeordnet, dass der Keil durch Betätigen der Schraube in Bezug auf die Schnittstellenvorrichtung bewegbar ist. Insbesondere kann der Keil wenigstens eine Nut aufweisen, und die Schraube kann wenigstens einen Grat umfassen, der in die Nut des Keils greift.

Der Keil ist durch Betätigen der Schraube parallel zu der axialen Richtung bewegbar. Dabei ist der Keil dazu ausgebildet, ein Verklemmen des Einsetzabschnitts in einer zweiten Richtung, die von der axialen Richtung verschieden ist, zu bewirken. Die zweite Richtung kann in Bezug auf den Laufwagen parallel zu einer vertikalen oder einer seitlichen Richtung verlaufen.

Die Blockierungsvorrichtung kann ferner wenigstens ein Klemmelement umfassen, das in Bezug auf die Schnittstellenvorrichtung parallel zu der zweiten Richtung beweglich angeordnet ist. Dabei können der Keil und das Klemmelement derart angeordnet sein, dass das Klemmelement durch Bewegen des Keils bewegbar ist.

Die Schnittstellenvorrichtung kann zwei Einsetzabschnitte umfassen, an denen jeweils eine Blockierungsvorrichtung angeordnet ist und die auf einander gegenüber liegenden Seiten des Anbringungsabschnitts angeordnet sind. Die Einsetzabschnitte können jeweils in einer in Bezug auf den Laufwagen seitlichen Richtung an den Anbringungsabschnitt angrenzen.

Die Schnittstellenvorrichtung kann als Schnittstellenplatte ausgebildet sein. Zusätzlich oder alternativ dazu kann die Schnittstellenvorrichtung wenigstens einen Kühlkanal zur Kühlung des Primärteils des Linearmotors aufweisen.

Ein zweiter Aspekt betrifft einen Laufwagen zur Verwendung mit einem Linearmotor. Der Laufwagen umfasst wenigstens einen Aufnahmeabschnitt zur Aufnahme wenigstens eines Einsetzabschnitts einer Schnittstellenvorrichtung der hier vorgestellten Art.

Ein dritter Aspekt betrifft ein Laufwagensystem, das einen Laufwagen und eine Schnittstellenvorrichtung der hier jeweils vorgestellten Art umfasst. Der wenigstens eine Aufnahmeabschnitt des Laufwagens ist zur Aufnahme des wenigstens einen Einsetzabschnitts der Schnittstellenvorrichtung entlang der axialen Richtung ausgebildet.

Ein vierter Aspekt betrifft ein Linearmotorsystem, das einen Laufwagen und eine Schnittstellenvorrichtung der hier jeweils vorgestellten Art sowie einen Linearmotor mit einem Primärteil und einem Sekundärteil umfasst. Das Primärteil des Linearmotors ist an dem Anbringungsabschnitt der Schnittstellenvorrichtung anbringbar. Zudem ist der wenigstens eine Aufnahmeabschnitt des Laufwagens zur Aufnahme des wenigstens einen Einsetzabschnitts der Schnittstellenvorrichtung entlang der axialen Richtung ausgebildet.

Ein fünfter Aspekt betrifft ein Verfahren zum lösbaren Befestigen eines Primärteils eines Linearmotors an einem Laufwagen. Das Verfahren umfasst das Bereitstellen eines Linearmotorsystems. Das Linearmotorsystem umfasst dabei eine Schnittstellenvorrichtung mit einem Anbringungsabschnitt, wenigstens einem Einsetzabschnitt und wenigstens einer Blockierungsvorrichtung; einen Linearmotor mit einem Primärteil und einem Sekundärteil, wobei das Primärteil des Linearmotors an dem Anbringungsabschnitt der Schnittstellenvorrichtung angebracht ist, und einen Laufwagen mit wenigstens einem Aufnahmeabschnitt. Das Verfahren umfasst zudem ein Einsetzen des wenigstens einen Einsetzabschnitts der Schnittstellenvorrichtung in den wenigstens einen Aufnahmeabschnitt des Laufwagens entlang einer axialen Richtung des Linearmotors. Ferner umfasst das Verfahren ein Betätigen der wenigstens einen Blockierungsvorrichtung, um den wenigstens einen Einsetzabschnitt in dem wenigstens einen Aufnahmeabschnitt durch Verklemmen lösbar zu blockieren. Die Blockierungsvorrichtung umfasst wenigstens einen Keil und wenigstens eine Schraube, die in Bezug auf die Schnittstellenvorrichtung beweglich angeordnet sind, derart dass der Keil durch Betätigen der Schraube in Bezug auf die Schnittstellenvorrichtung bewegbar ist.

Weitere Einzelheiten und Vorteile der Erfindung werden bei der nachfolgenden Beschreibung einiger Ausführungsbeispiele anhand der Figuren deutlich werden.

Es zeigen:
- Fig. 1: exemplarisch und schematisch eine Explosionsansicht einer Schnittstellenvorrichtung gemäß einer Ausführungsform;
- Fig. 2: exemplarisch und schematisch eine Explosionsansicht einer Schnittstellenvorrichtung gemäß einer Ausführungsform mit einem daran angebrachten Primärteil eines Linearmotors;
- Fig. 3: exemplarisch und schematisch eine Rückansicht eines Linearmotorsystems gemäß einer Ausführungsform;
- Fign. 4a-4b: exemplarisch und schematisch Schnittsansichten eines Linearmotorsystems bei verschiedenen Positionen der Blockierungsvorrichtung gemäß einer Ausführungsform; und
- Fig. 5: ein Flussdiagramm eines Verfahrens zum lösbaren Befestigen eines Primärteils eines Linearmotors an einem Laufwagen gemäß einer Ausführungsform.

In der vorliegenden Beschreibung beziehen sich Richtungsangaben auf ein Linearmotorsystem, in dem die beschriebenen Techniken umgesetzt sind. Dabei bezeichnet eine axiale Richtung Rx eine Richtung parallel zu einer Antriebsrichtung des Linearmotors, und eine vertikale Richtung Rz eine dazu senkrechte Stütz- bzw. Tragrichtung des Laufwagens, etwa für eine darauf anzuordnende Traglast oder Werkzeugmaschine. Eine seitliche Richtung Ry bezeichnet eine zu den vorgenannten Richtungen orthogonale Richtung. Typischerweise verläuft in der seitlichen Richtung Ry die Quererstreckung einer Linearführung des Linearmotorsystems sowie die Quererstreckung eines Sekundärteils des Linearmotors, beispielsweise in Form einer Magnetbahn.

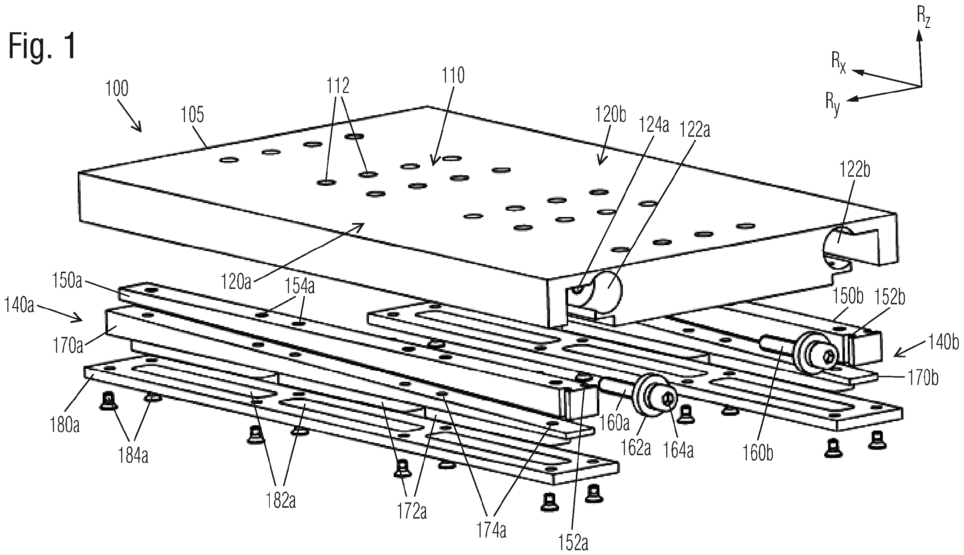

Fig. 1 zeigt exemplarisch und schematisch eine Explosionsansicht einer Schnittstellenvorrichtung 100. Die dargestellte Schnittstellenvorrichtung 100 ist insbesondere zum lösbaren Befestigen eines Primärteils eines Linearmotors an einem Laufwagen vorgesehen.

Die Schnittstellenvorrichtung 100 umfasst einen Körper 105, der sich im Wesentlichen plattenförmig in einer Ebene erstreckt, die durch die axiale Richtung Rx und die seitliche Richtung Ry aufgespannt ist. Der Körper 105 weist in einem mittleren Bereich einen Anbringungsabschnitt 110 auf, der zum Anbringen eines Primärteils eines Linearmotors an der Unterseite des Körpers 105 dient. Dafür sind in dem Anbringungsabschnitt 110 mehrere Bohrungen 112 durch den Körper 105 vorhanden, die beispielsweise ein Anschrauben des Primärteils an die Unterseite des Körpers 105 gestatten.

Zu beiden Seiten angrenzend an den Anbringungsabschnitt 110 ist jeweils ein Einsetzabschnitt 120a, 120b vorgesehen. Die Einsatzabschnitte 120a, 120b sind jeweils zum Einsetzen in einen entsprechenden Aufnahmeabschnitt eines Laufwagens entlang der axialen Richtung Rx ausgebildet.

Im Bereich jedes der Einsatzabschnitte 120a, 120b ist eine Aussparung 122a, 122b in dem Körper 105 vorgesehen. Die Aussparungen 122a, 122b dienen jeweils zur Aufnahme einer Blockierungsvorrichtung 140a, 140b, die ein lösbares Blockieren des jeweiligen Einsatzabschnitts 120a, 120b in dem entsprechenden Aufnahmeabschnitt des Laufwagens ermöglicht.

Die Blockierungsvorrichtungen 140a, 140b und die Aussparungen 122a, 122b sind im Wesentlichen spiegelgleich ausgebildet. Der Einfachheit halber wird daher nachfolgend nur auf die in axialer Richtung Rx linke Blockierungsvorrichtung 140a Bezug genommen.

Die Blockierungsvorrichtung 140a ist dazu ausgebildet, den Einsetzabschnitt 120a in einem entsprechenden Aufnahmeabschnitt eines Laufwagens in senkrechter Richtung Rz zu verklemmen. Zu diesem Zweck umfasst die Blockierungsvorrichtung 140a eine Keilanordnung 150a, 170a mit einem in axialer Richtung Rx beweglichen Keil 150a und einem zur Kraftverteilung dienenden Gegenstück in Form eines keilförmigen Klemmelements 170a. Die Schrägseiten des Keils 150a und des Klemmelements 170a sind dabei aufeinander ausgerichtet.

Die Aussparung 122a ist so gestaltet, dass sie den Keil 150a und das Klemmelement 170a aufnimmt. Der Keil 150a und das Klemmelement 170a werden dabei durch ein Rahmenelement 180a in der Aussparung 122a gehalten. Das Rahmenelement 180a ist hierfür mit Schrauben 184a an der Unterseite des Körpers 105 befestigt.

Das Rahmenelement 160a weist mehrere Durchbrüche 182a auf, durch die entsprechende Vorsprünge 172a des Klemmelements 170a ragen. Eine Tiefe der Vorsprünge 172a ist so bemessen, dass sie größer ist als eine Dicke des Rahmenelements 160a, um ein Hindurchragen der Vorsprünge 172a durch eine Unterseite des Rahmenelements 180a zu ermöglichen.

Die in den Durchbrüchen 182a angeordneten Vorsprünge 172a des Klemmelements 170a begrenzen eine Beweglichkeit des Klemmelements 170a auf eine Richtung parallel zur vertikalen Richtung Rz. Dem gegenüber ist der Keil 150a parallel zur axialen Richtung Rx bewegbar. Durch die dargestellte Anordnung von Keil 150a und Klemmelement 170a bewirkt eine Bewegung des Keils 150a in Einschubrichtung des Keils 150a somit, dass das Klemmelement 170a in Richtung auf das Rahmenelement 180a gedrückt wird.

Umgekehrt bewirkt ein Bewegen des Keils 150a entgegen seiner Einschubrichtung, dass Spielraum für das Klemmelement 170a in der Aussparung 122a in vertikaler Richtung Rz entsteht und das Klemmelement 170a somit in vertikaler Richtung beweglich wird. Eine Tiefe, um die die Vorsprünge 172a durch die Unterseite des Rahmenelements 180a hinausragen, kann so beispielsweise durch Eindrücken der Vorsprünge 172a verringert werden.

Zum Halten sowie zum Verschieben des Keils 150a in axialer Richtung Rx weist der Keil 150a wenigstens eine seitliche Nut 152a auf. Als Teil der Blockierungsvorrichtung 140a umfasst die Schnittstellenvorrichtung 100 außerdem eine Schraube 160a mit einem Grat 162a, der so ausgebildet ist, dass er in die Nut 152a des Keils 150a greift. Durch Eindrehen der Schraube 160a in eine Gewindebohrung 124a im Bereich der Aussparung 122a erfolgt so ein Halten des Keils 150a in axialer Richtung Rx. Gleichzeitig ist durch eine Einschraubtiefe der Schraube 160a in die Gewindebohrung 124a eine Einschubtiefe des Keils 150a in axialer Richtung Rx einstellbar. Die Schraube weist hierfür an ihrem nach außen gerichteten Ende eine Werkzeugaufnahme 164a auf. In dem gezeigten Beispiel weist jeder die Keile 150a, 150b auf beiden Seiten jeweils eine Nut 152a, 152b auf. Dies gestattet eine identische Ausbildung der Keile 150a, 150b.

Durch die beschriebene Wirkungsweise der Blockierungsvorrichtung 140a lässt sich mittels Betätigen der Schraube 160a, beispielsweise mithilfe eines in die Werkzeugaufnahme 164a der Schraube 160a eingesetzten Schraubwerkzeugs, die Tiefe verändern, um die die Vorsprünge 172a des Klemmelements 170a durch die Unterseite des Rahmenelements 170a ragend gehalten sind. Die so veränderliche Tiefe der Vorsprünge 172a ist dazu verwendbar, auf reversible Weise ein Verklemmen der Schnittstellenvorrichtung 100 in einer Aufnahme eines Laufwagens zu bewirken.

Eine gute Funktionalität der Keilanordnung 150a, 170a setzt voraus, dass die Schrägflächen von Keil 150a und Klemmelement 170a in Bezug aufeinander präzise geschliffen sind, um eine günstige Kraftverteilung zwischen diesen Teilen zu erzielen und übermäßige Reibung zu vermeiden. Auch ist es vorteilhaft für eine günstige Kraftverteilung gegenüber den umgebenden Vorrichtungsteilen, wenn die Außenflächen des Keils 150a und des Klemmelements 170a einschließlich der Auflageflächen der Vorsprünge 172a durch Schleifen sorgfältig geglättet sind. Um einen solchen Schleifprozess zu begünstigen, sind in dem Keil 150a und dem Klemmelement 170a auf einander ausgerichtete Bohrungen 154a, 174a vorgesehen.

Bei einem bevorzugten Schleifprozess werden zunächst die Schrägfläche des Keils 150a geschliffen und dann unter Verwendung der Bohrungen 154a, 174a der Keil 150a und das Klemmelement 170a zusammengefügt. Anschließend werden die Oberseite des Keils 150a präzise geglättet und dann die Auflageflächen der Vorsprünge 172a durch Schleifen bearbeitet, sodass sie ebenfalls glatt und zur Oberseite des Keils 150a mit einer Toleranz von wenigen Mikrometern parallel verlaufen. Bei einer so bearbeiteten Keilanordnung 150a, 170a bilden der Keil 150a und das Klemmelement 170a ein individuelles, aufeinander abgestimmtes Teilepaar, dessen einzelne Teile nicht mehr mit denen anderer Keilanordnungen 150b, 170b vertauscht werden sollten.

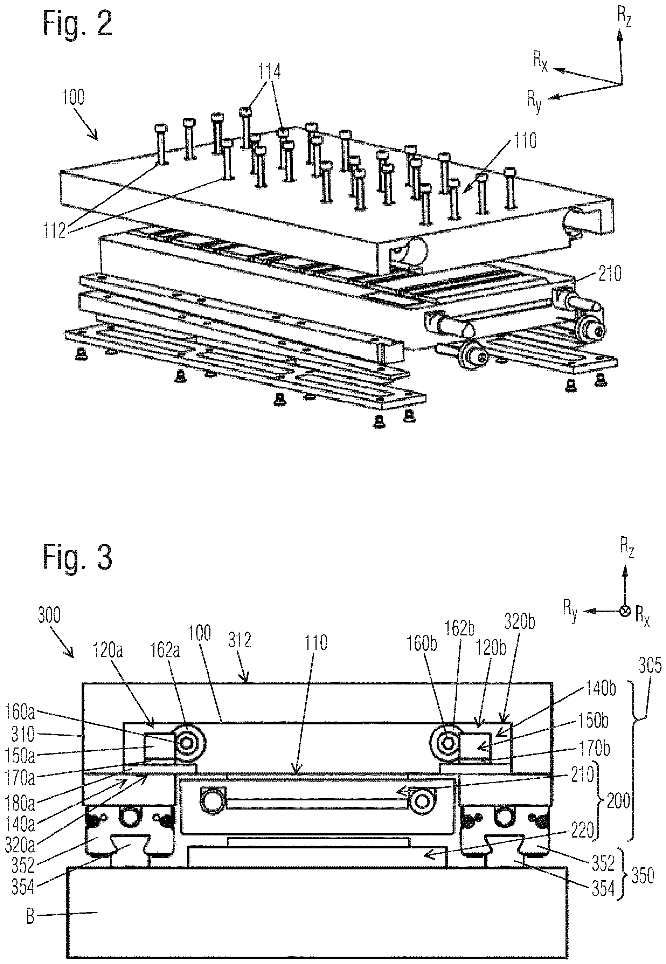

Fig. 2 zeigt die Schnittstellenvorrichtung 100 aus Fig. 1 und ein unterhalb des Anbringungsabschnitts 110 angeordnetes Primärteil 210 eines Linearmotors. Dargestellt sind zudem mehrere Schrauben 114, die in den Bohrungen 112 der Schnittstellenvorrichtung 100 angeordnet sind, und die zum Anbringen des Primärteils 210 an der Schnittstellenvorrichtung 100 durch Eindrehen der Schrauben 114 in entsprechende Schraublöcher an der Oberseite des Primärteils 210 dienen.

Das Primärteil 210 des Linearmotors ist dazu ausgebildet, mit einem als Magnetbahn ausgebildeten Sekundärteil (nicht dargestellt) des Linearmotors in Wechselwirkung zu treten, um so einen Antrieb des Linearmotorsystems zu bewirken.

Fig. 3 zeigt exemplarisch und schematisch eine Rückansicht eines Linearmotorsystems 300. Das Linearmotorsystem 300 umfasst einen Laufwagen 310, an dem ein Primärteil 210 eines Linearmotors 200 lösbar befestigt ist. Der Laufwagen 310 ist zur Bewegung in axialer Richtung Rx des Linearmotors 200 entlang einer Linearführung 350 auf einem Maschinenbett B (hier im Querschnitt dargestellt) gelagert. Die Linearführung 350 umfasst in dem gezeigten Beispiel zwei parallel verlaufende Schienen 354, die ortsfest auf dem Maschinenbett B angeordnet sind und auf denen der Laufwagen 310 mittels Fahrgestellen 352 gelagert ist. Auf dem Maschinenbett B ist in dem gezeigten Beispiel zudem zwischen den Schienen 354 das als Magnetbahn ausgebildete Sekundärteil 220 des Linearmotors 200 ortsfest angeordnet.

Das Primärteil 210 ist mit dem Laufwagen 310 über eine Schnittstellenvorrichtung 100 lösbar verbunden. Bei der Schnittstellenvorrichtung 100 handelt es sich beispielsweise um die Schnittstellenvorrichtung 100 wie im Zusammenhang mit Fign. 1 und 2 beschrieben. Das im Zusammenhang mit Fign. 1 und 2 Gesagte gilt dabei entsprechend für die Schnittstellenvorrichtung 100 aus Fig. 3. Insbesondere bezeichnen gleiche Bezugszeichen gleiche Merkmale.

Die Schnittstellenvorrichtung 100 ist so in dem Laufwagen 310 angeordnet, dass jeder der Einsetzabschnitte 120a, 120b der Schnittstellenvorrichtung 100 in einem Aufnahmeabschnitt 320a, 320b des Laufwagens 310 aufgenommen und dort mittels Blockierungsvorrichtungen 140a, 140b durch Verklemmen lösbar befestigt sind. Der Laufwagen 310 und die Schnittstellenvorrichtung 100 sind hierfür als korrespondierende Teile eines Laufwagensystems 305 aufeinander abgestimmt. Das Primärteil 210 ist an der Unterseite der Schnittstellenvorrichtung 100 an dem Anbringungsabschnitt 110 angebracht, beispielsweise angeschraubt, wie im Zusammenhang mit Fig. 2 beschrieben.

In Fig. 3 ist erkennbar, wie der Grat 162a, 162b jeder der Schrauben 160a, 160b in eine seitliche Nut 152a, 152b des jeweiligen Keils 150a, 150b zum Halten und Verstellen der Keile 150a, 150b in axialer Richtung Rx greift. Jede der Schrauben 160a, 160b ist dabei beispielsweise so weit in eine jeweilige Gewindebohrung 124a der Schnittstellenvorrichtung 100 eingeschraubt, dass eine entsprechende Einschubtiefe jedes der Keile 150a, 150b erzielt ist, die eine erforderliche Klemmkraft in vertikaler Richtung Rz auf jeden der Aufnahmeabschnitte 320a, 320b bewirkt, um die Schnittstellenvorrichtung 100 mit erforderlicher Kraft an dem Laufwagen 310 zu befestigen.

Fig. 3 verdeutlicht, dass die vorliegend beschriebenen Techniken mittels der Schnittstellenvorrichtung 100 ein Einsetzen und Herausnehmen der Schnittstellenvorrichtung 100 mitsamt des Primärteils 210 des Linearmotors 200 parallel zur axialen Richtung Rx gestatten. In dem gezeigten Beispiel sind auch die Schrauben 160a, 160b als Bedienelemente der Blockierungsvorrichtungen 140a, 140b parallel zur axialen Richtung Rx zugänglich und bedienbar. Dies begünstigt besonders eine Verwendung von Linearmotoren im Zusammenhang mit Applikationen, bei denen eine funktionale Baugruppe, wie beispielsweise eine Werkzeugmaschine oder eine Transportvorrichtung, an einer Oberseite 312 des Laufwagens 310 angeordnet ist. In solchen Fällen gestatten die vorangehend beschriebenen Techniken den Ein- und Ausbau eines Primärteils 210, ohne dass Aufbauten des Laufwagens 310 dafür entfernt werden müssen oder einen Zugang erschweren.

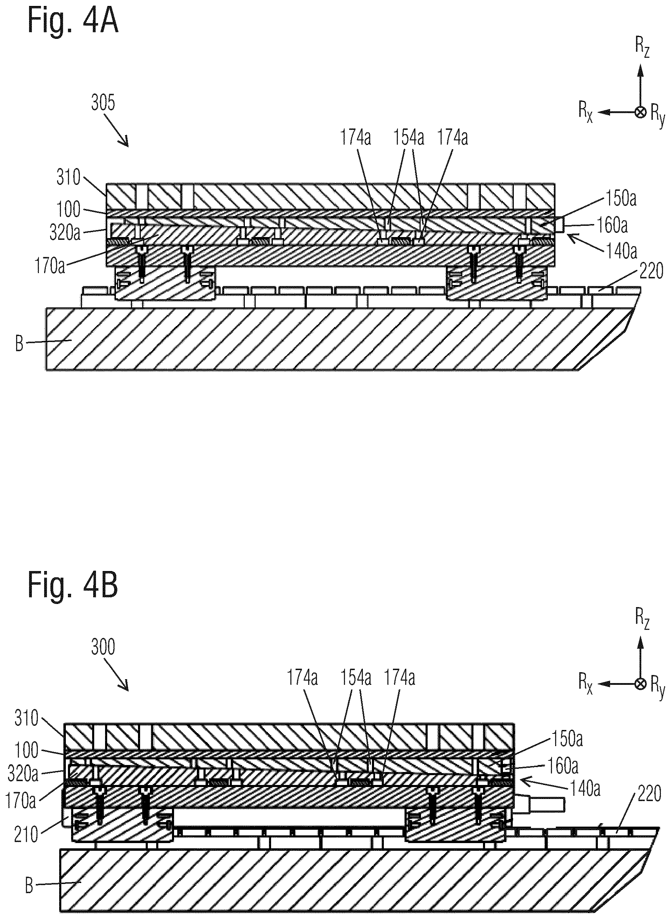

Fig. 4A zeigt eine Schnittansicht entlang einer vertikalen Längsebene eines Laufwagensystems 305, wie im Zusammenhang mit Fig. 3 beschrieben. Die Schnittebene liegt dabei auf der Breite einer der Blockierungsvorrichtungen 140a mit Keil 150a und Klemmelement 170a. In dem gezeigten Beispiel befindet sich der Keil 150a in einer gelösten Position der Blockierungsvorrichtung 140a. Dabei ragt ein Teil der Schraube 160a über die Rückseite des Laufwagensystems 305 hervor. Zudem sind Bohrungen 154 durch den Keil 150a in Bezug auf entsprechende Bohrungen im Klemmelement 174a in rückwärtige Richtung versetzt. Die dargestellte Position des Keil 150a bewirkt keine oder eine nur geringe Klemmkraft auf das Klemmelement 170a, sodass ein Herausnehmen der Schnittstellenvorrichtung 100 aus dem Laufwagen 310 in axialer Richtung Rx ermöglicht ist. An dem dargestellten Laufwagensystem 305 ist kein Primärteil eines Linearmotors angebracht.

Fig. 4B zeigt eine Schnittansicht eines Linearmotorsystems 300. Bei dem Linearmotorsystem 300 handelt es sich beispielsweise um das Linearmotorsystem 300 aus Fig. 3. Die Schnittebene entspricht mit Bezug auf den Laufwagen 310 der Schnittebene durch das Laufwagensystem 305 aus Fig. 4A. In dem Beispiel von Fig. 4B ist dabei ein Primärteil 210 an dem Laufwagen 310 lösbar befestigt.

Abweichend von Fig. 4A befindet sich in Fig. 4B die Blockierungsvorrichtung 140a in einer blockierenden Position. Dabei ist der Keil 150a gegenüber der Position in Fig. 4A weiter in Einschubrichtung bewegt. In der dargestellten Position des Keils 150a ragt kein Teil der Schraube 160a n über die Rückseite des Laufwagens 310 hinaus. Zudem sind die Bohrungen 154a im Keil 150a gegenüber den entsprechenden Bohrungen 174a in dem Klemmelement 170a in Einschubrichtung des Keils 150a verschoben.

Bei der in Fig. 4B dargestellten Position ragen die Vorsprünge des Klemmelements 170a weiter über eine Unterseite des Einsatzabschnitts der Schnittstellenvorrichtung 100 hinaus als bei der in Fig. 4A gezeigten Position. Das Klemmelement 140a bewirkt damit ein Verklemmen der Schnittstellenvorrichtung 100 gegenüber dem Laufwagen 310.

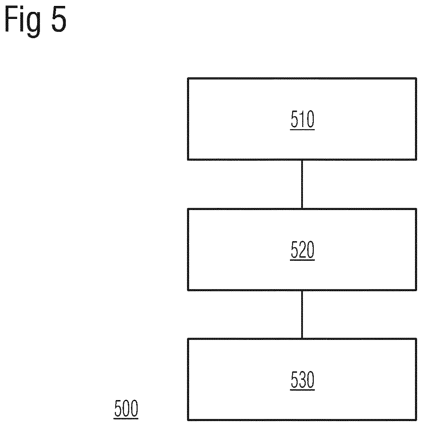

Fig. 5 zeigt ein Flussdiagramm eines Verfahrens 500 zum lösbaren Befestigen eines Primärteils eines Linearmotors an einem Laufwagen. Das Verfahren umfasst ein Bereitstellen, Schritt 510, eines Linearmotorsystems. Das Linearmotorsystem umfasst dabei eine Schnittstellenvorrichtung mit einem Anbringungsabschnitt sowie wenigstens einem Einsatzabschnitt und einer Blockierungsvorrichtung. Bei der Schnittstellenvorrichtung handelt es sich beispielsweise um eine solche wie im Zusammenhang mit Fign. 1 bis 4B beschrieben. Außerdem umfasst das Linearmotorsystem einen Linearmotor mit einem Primärteil und einem Sekundärteil, wobei das Primärteil des Linearmotors an einem Anbringungsabschnitt der Schnittstellenvorrichtung angebracht ist, sowie einen Laufwagen mit wenigstens einem Aufnahmeabschnitt. Bei dem Linearmotorsystem handelt es sich beispielsweise um ein Linearmotorsystem wie im Zusammenhang mit Fig. 3 beschrieben.

Das Verfahren 500 umfasst ferner ein Einsetzen, Schritt 520, des wenigstens einen Einsatzabschnitts der Schnittstellenvorrichtung in den wenigstens einen Aufnahmeabschnitt des Laufwagens entlang einer axialen Richtung des Linearmotors. Das Verfahren 500 umfasst außerdem ein Betätigen, Schritt 530, der wenigstens einen Blockierungsvorrichtung, um den wenigstens einen Einsatzabschnitt in dem wenigstens einen Aufnahmeabschnitt lösbar zu blockieren.

Die vorangehend beschriebenen Techniken sind an dem Beispiel einer Schnittstellenvorrichtung 100 wie in Fig. 1 gezeigt veranschaulicht. Es versteht sich jedoch, dass die Vorteile der vorangehend beschriebenen Technik auch durch abweichende Umsetzungen erzielbar sind. Beispielsweise sind in abweichenden Beispielen der Schnittstellenvorrichtung 100 die Keilanordnungen der Blockierungsvorrichtungen so ausgerichtet, dass sie eine Klemmkraft in seitlicher Richtung Ry ausüben. In weiteren Beispielen sind die Keilanordnungen zudem in seitlicher Richtung Ry ausgerichtet, sodass eine Einschubrichtung wenigstens eines der Keile parallel zu der seitlichen Richtung Ry verläuft. Weitere Beispiele der Schnittstellenvorrichtung 100 sind zudem dazu ausgebildet, ein Verklemmen gegenüber dem Laufwagen durch andere als die beschriebenen Techniken zu erzielen. Beispielsweise umfassen einige dieser Umsetzungen eine hydraulische oder pneumatische Klemmvorrichtung. Wiederum andere Beispiele ermöglichen eine Befestigung der Schnittstellenvorrichtung an einem Laufwagen mittels eines steuerbaren Magneten.

In einigen Beispielen umfasst die Schnittstellenvorrichtung 100 zudem eine oder mehrere Kühlkanäle zur Kühlung eines daran angebrachten Primärteils eines Linearmotors. In weiteren Beispielen weist die Schnittstellenvorrichtung 100 zudem eine von einer Platte abweichende Geometrie auf. Einige dieser Umsetzungen sind dazu geeignet, einen Austausch eines Primärteils eines Linearmotors, der an einem Laufwagen befestigt ist, zu begünstigen, ohne dass ein Zugriff über eine Oberseite des Laufwagens erforderlich ist.

## Patentansprüche

1. Schnittstellenvorrichtung (100) zum lösbaren Befestigen eines Primärteils (210) eines Linearmotors (200) an einem Laufwagen (310), wobei die Schnittstellenvorrichtung (100) umfasst:
- einen Anbringungsabschnitt (110) zum Anbringen des Primärteils (210) des Linearmotors (200) an der Schnittstellenvorrichtung (100);
- wenigstens einen Einsetzabschnitt (120a, 120b), der zum Einsetzen in einen Aufnahmeabschnitt (320a, 320b) des Laufwagens (310) entlang einer axialen Richtung (Rx) des Linearmotors (200) ausgebildet ist, und
- wenigstens eine Blockierungsvorrichtung (140a, 140b) zum lösbaren Blockieren des Einsetzabschnitts (120a, 120b) in dem Aufnahmeabschnitt (320a, 320b) des Laufwagens (310), wobei die Blockierungsvorrichtung (140a, 140b) dazu ausgebildet ist, den Einsetzabschnitt (120a, 120b) durch Verklemmen in dem Aufnahmeabschnitt (320a, 320b) des Laufwagens (310) zu blockieren,
wobei
- die Blockierungsvorrichtung wenigstens einen Keil (150a, 150b) und wenigstens eine Schraube (160a, 160b) umfasst, die in Bezug auf die Schnittstellenvorrichtung (100) beweglich angeordnet sind, derart dass der Keil (150a, 150b) durch Betätigen der Schraube (160a, 160b) in Bezug auf die Schnittstellenvorrichtung bewegbar ist,
**dadurch gekennzeichnet, dass**
der Keil (150a, 150b) durch Betätigen der Schraube (160a, 160b) parallel zu der axialen Richtung (Rx) bewegbar ist und dazu ausgebildet ist, ein Verklemmen des Einsetzabschnitts (120a, 120b) in einer zweiten Richtung (Rz), die von der axialen Richtung (Rx) verschieden ist, zu bewirken.

2. Schnittstellenvorrichtung nach Anspruch 1, wobei der Keil (150a, 150b) wenigstens eine Nut (152a, 152b) aufweist und die Schraube (160a, 160b) wenigstens einen Grat (162a, 162b) umfasst, der in die Nut (152a, 152b) des Keils (150a, 150b) greift.

3. Schnittstellenvorrichtung nach Anspruch 1, wobei die Blockierungsvorrichtung (140a, 140b) ferner wenigstens ein Klemmelement (170a, 170b) umfasst, das in Bezug auf die Schnittstellenvorrichtung (100) parallel zu der zweiten Richtung (Rz) beweglich angeordnet ist, wobei der Keil (150a, 150b) und das Klemmelement (170a, 170b) derart angeordnet sind, dass das Klemmelement (170a, 170b) durch Bewegen des Keils (150a, 150b) bewegbar ist.

4. Schnittstellenvorrichtung nach einem der vorstehenden Ansprüche, wobei die Schnittstellenvorrichtung (100) zwei Einsetzabschnitte (120a, 120b) umfasst, an denen jeweils eine Blockierungsvorrichtung (140a, 140b) angeordnet ist und die an einander gegenüber liegenden Seiten des Anbringungsabschnitts (110) angeordnet sind.

5. Schnittstellenvorrichtung nach einem der vorstehenden Ansprüche, wobei die Schnittstellenvorrichtung ferner wenigstens einen Kühlkanal zur Kühlung des Primärteils des Linearmotors aufweist.

6. Laufwagensystem (305), umfassend:
- eine Schnittstellenvorrichtung (100) nach einem der Ansprüche 1 bis 5, und
- den Laufwagen (310) zur Verwendung mit dem Linearmotor (200), der Laufwagen (310) umfassend den wenigstens einen Aufnahmeabschnitt (320a, 320b) zur Aufnahme des wenigstens einen Einsetzabschnitts (120a, 120b) der Schnittstellenvorrichtung (100),
wobei der wenigstens eine Aufnahmeabschnitt (320a, 320b) des Laufwagens (310) zur Aufnahme des wenigstens einen Einsetzabschnitts (120a, 120b) der Schnittstellenvorrichtung (100) entlang der axialen Richtung (Rx) ausgebildet ist.

7. Linearmotorsystem (300), umfassend:
- eine Schnittstellenvorrichtung (100) nach einem der Ansprüche 1 bis 5,
- einen Linearmotor (200) mit einem Primärteil (210) und einem Sekundärteil (220), wobei das Primärteil (210) des Linearmotors (200) an dem Anbringungsabschnitt (110) der Schnittstellenvorrichtung (100) anbringbar ist, und
- einen Laufwagen (310) mit wenigstens einem Aufnahmeabschnitt (320a, 320b), der zur Aufnahme des wenigstens einen Einsetzabschnitts (120a, 120b) der Schnittstellenvorrichtung (100) entlang der axialen Richtung (Rx) ausgebildet ist.

8. Verfahren zum lösbaren Befestigen eines Primärteils (210) eines Linearmotors (200) an einem Laufwagen (310), umfassend die folgenden Schritte:
- Bereitstellen eines Linearmotorsystems, welches umfasst:
eine Schnittstellenvorrichtung (100) mit einem Anbringungsabschnitt (110), wenigstens einem Einsetzabschnitt (120a, 120b) und wenigstens einer Blockierungsvorrichtung (140a, 140b);
den Linearmotor (200) mit dem Primärteil (210) und einem Sekundärteil (220), wobei das Primärteil (210) des Linearmotors (200) an dem Anbringungsabschnitt (110) der Schnittstellenvorrichtung (100) angebracht ist, und
den Laufwagen (310) mit wenigstens einem Aufnahmeabschnitt (320a, 320b);
- Einsetzen des wenigstens einen Einsetzabschnitts (120a, 120b) der Schnittstellenvorrichtung (100) in den wenigstens einen Aufnahmeabschnitt (320a, 320b) des Laufwagens (310) entlang einer axialen Richtung (Rx) des Linearmotors, und
- Betätigen der wenigstens einen Blockierungsvorrichtung (140a, 140b), um den wenigstens einen Einsetzabschnitt (120a, 120b) in dem wenigstens einen Aufnahmeabschnitt (320a, 320b) durch Verklemmen lösbar zu blockieren, wobei
- die Blockierungsvorrichtung wenigstens einen Keil (150a, 150b) und wenigstens eine Schraube (160a, 160b) umfasst, die in Bezug auf die Schnittstellenvorrichtung (100) beweglich angeordnet sind, derart dass der Keil (150a, 150b) durch Betätigen der Schraube (160a, 160b) in Bezug auf die Schnittstellenvorrichtung bewegbar ist,
**dadurch gekennzeichnet, dass**
der Keil (150a, 150b) durch Betätigen der Schraube (160a, 160b) parallel zu der axialen Richtung (Rx) bewegbar ist und dazu ausgebildet ist, ein Verklemmen des Einsetzabschnitts (120a, 120b) in einer zweiten Richtung (Rz), die von der axialen Richtung (Rx) verschieden ist, zu bewirken.

## Claims

1. Interface apparatus (100) for releasably fastening a primary part (210) of a linear motor (200) to a carriage (310), the interface apparatus (100) comprising:
- an attachment portion (110) for attaching the primary part (210) of the linear motor (200) to the interface apparatus (100);
- at least one insertion portion (120a, 120b) which is configured for insertion into a receiving portion (320a, 320b) of the carriage (310) along an axial direction (Rx) of the linear motor (200), and
- at least one blocking apparatus (140a, 140b) for releasably blocking the insertion portion (120a, 120b) in the receiving portion (320a, 320b) of the carriage (310), the blocking apparatus (140a, 140b) being configured to block the insertion portion (120a, 120b) by way of jamming in the receiving portion (320a, 320b) of the carriage (310),
wherein
- the blocking apparatus comprises at least one wedge (150a, 150b) and at least one screw (160a, 160b) which are arranged movably in relation to the interface apparatus (100) in such a way that the wedge (150a, 150b) can be moved in relation to the interface apparatus by way of actuation of the screw (160a, 160b),
**characterized in that**
the wedge (150a, 150b) can be moved parallel to the axial direction (Rx) by way of actuation of the screw (160a, 160b) and is configured to bring about jamming of the insertion portion (120a, 120b) in a second direction (Rz) which is different from the axial direction (Rx).

2. Interface apparatus according to Claim 1, wherein the wedge (150a, 150b) has at least one groove (152a, 152b), and the screw (160a, 160b) comprises at least one ridge (162a, 162b) which engages into the groove (152a, 152b) of the wedge (150a, 150b).

3. Interface apparatus according to Claim 1, wherein the locking apparatus (140a, 140b) comprises, furthermore, at least one clamping element (170a, 170b) which is arranged movably parallel to the second direction (Rz) in relation to the interface apparatus (100), wherein the wedge (150a, 150b) and the clamping element (170a, 170b) are arranged in such a way that the clamping element (170a, 170b) can be moved by way of moving of the wedge (150a, 150b).

4. Interface apparatus according to one of the preceding claims, wherein the interface apparatus (100) comprises two insertion portions (120a, 120b), on each of which a blocking apparatus (140a, 140b) is arranged and which are arranged on opposite sides of the attachment portion (110).

5. Interface apparatus according to one of the preceding claims, wherein, furthermore, the interface apparatus has at least one cooling duct for cooling the primary part of the linear motor.

6. Carriage system (305), comprising:
- an interface apparatus (100) according to one of Claims 1 to 5, and
- the carriage (310) for use with the linear motor (200), the carriage (310) comprising the at least one receiving portion (320a, 320b) for receiving the at least one insertion portion (120a, 120b) of the interface apparatus (100),
wherein the at least one receiving portion (320a, 320b) of the carriage (310) is configured to receive the at least one insertion portion (120a, 120b) of the interface apparatus (100) along the axial direction (Rx).

7. Linear motor system (300), comprising:
- an interface apparatus (100) according to one of Claims 1 to 5,
- a linear motor (200) with a primary part (210) and a secondary part (220), wherein the primary part (210) of the linear motor (200) can be attached to the attachment portion (110) of the interface apparatus (100), and
- a carriage (310) with at least one receiving portion (320a, 320b) which is configured to receive the at least one insertion portion (120a, 120b) of the interface apparatus (100) along the axial direction (Rx).

8. Method for releasably fastening a primary part (210) of a linear motor (200) to a carriage (310), comprising the following steps:
- providing a linear motor system which comprises:
an interface apparatus (100) with an attachment portion (110), at least one insertion portion (120a, 120b) and at least one blocking apparatus (140a, 140b);
the linear motor (200) with the primary part (210) and the secondary part (220), wherein the primary part (210) of the linear motor (200) is attached to the attachment portion (110) of the interface apparatus (100), and
the carriage (310) with at least one receiving portion (320a, 320b);
- inserting the at least one insertion portion (120a, 120b) of the interface apparatus (100) into the at least one receiving portion (320a, 320b) of the carriage (310) along an axial direction (Rx) of the linear motor, and
- actuating the at least one blocking apparatus (140a, 140b), in order to releasably block the at least one insertion portion (120a, 120b) in the at least one receiving portion (320a, 320b) by way of jamming, wherein
- the blocking apparatus comprises at least one wedge (150a, 150b) and at least one screw (160a, 160b) which are arranged movably in relation to the interface apparatus (100) in such a way that the wedge (150a, 150b) can be moved in relation to the interface apparatus by way of actuation of the screw (160a, 160b),
**characterized in that**
the wedge (150a, 150b) can be moved parallel to the axial direction (Rx) by way of actuation of the screw (160a, 160b) and is configured to bring about jamming of the insertion portion (120a, 120b) in a second direction (Rz) which is different from the axial direction (Rx).

## Revendications

1. Dispositif d'interface (100) pour fixer de manière amovible une partie primaire (210) d'un moteur linéaire (200) à un chariot (310), le dispositif d'interface (100) comprenant :
- une section de montage (110) pour monter la partie primaire (210) du moteur linéaire (200) sur le dispositif d'interface (100) ;
- au moins une section d'insertion (120a, 120b) configurée pour être insérée dans une section de réception (320a, 320b) du chariot (310) le long d'une direction axiale (Rx) du moteur linéaire (200), et
- au moins un dispositif de blocage (140a, 140b) pour bloquer de manière amovible la section d'insertion (120a, 120b) dans la section de réception (320a, 320b) du chariot (310), le dispositif de blocage (140a, 140b) étant configuré pour bloquer la section d'insertion (120a, 120b) par coincement dans la section de réception (320a, 320b) du chariot (310),
- le dispositif de blocage comprenant au moins une cale (150a, 150b) et au moins une vis (160a, 160b) qui sont agencées de manière mobile par rapport au dispositif d'interface (100), de telle sorte que la cale (150a, 150b) peut être déplacée par rapport au dispositif d'interface en actionnant la vis (160a, 160b),
**caractérisé en ce que**
la cale (150a, 150b) peut être déplacée parallèlement à la direction axiale (Rx) en actionnant la vis (160a, 160b) et est configurée pour provoquer un coincement de la section d'insertion (120a, 120b) dans une deuxième direction (Rz) différente de la direction axiale (Rx).

2. Dispositif d'interface selon la revendication 1, dans lequel la cale (150a, 150b) présente au moins une rainure (152a, 152b) et la vis (160a, 160b) comprend au moins une arête (162a, 162b) qui s'engage dans la rainure (152a, 152b) de la cale (150a, 150b).

3. Dispositif d'interface selon la revendication 1, dans lequel le dispositif de blocage (140a, 140b) comprend en outre au moins un élément de serrage (170a, 170b) agencé de manière mobile par rapport au dispositif d'interface (100) parallèlement à la deuxième direction (Rz), la cale (150a, 150b) et l'élément de serrage (170a, 170b) étant agencés de telle sorte que l'élément de serrage (170a, 170b) peut être déplacé en déplaçant la cale (150a, 150b).

4. Dispositif d'interface selon l'une quelconque des revendications précédentes, dans lequel le dispositif d'interface (100) comprend deux sections d'insertion (120a, 120b) sur chacune desquelles est agencé un dispositif de blocage (140a, 140b) et qui sont agencées sur des côtés opposés de la section de montage (110).

5. Dispositif d'interface selon l'une quelconque des revendications précédentes, dans lequel le dispositif d'interface présente en outre au moins un canal de refroidissement pour refroidir la partie primaire du moteur linéaire.

6. Système de chariot (305), comprenant :
- un dispositif d'interface (100) selon l'une quelconque des revendications 1 à 5, et
- le chariot (310) à utiliser avec le moteur linéaire (200), le chariot (310) comprenant l'au moins une section de réception (320a, 320b) pour recevoir l'au moins une section d'insertion (120a, 120b) du dispositif d'interface (100),
l'au moins une section de réception (320a, 320b) du chariot (310) étant configurée pour recevoir l'au moins une section d'insertion (120a, 120b) du dispositif d'interface (100) le long de la direction axiale (Rx).

7. Système de moteur linéaire (300), comprenant :
- un dispositif d'interface (100) selon l'une quelconque des revendications 1 à 5,
- un moteur linéaire (200) ayant une partie primaire (210) et une partie secondaire (220), la partie primaire (210) du moteur linéaire (200) pouvant être montée sur la section de montage (110) du dispositif d'interface (100), et
- un chariot (310) avec au moins une section de réception (320a, 320b) configurée pour recevoir l'au moins une section d'insertion (120a, 120b) du dispositif d'interface (100) le long de la direction axiale (Rx).

8. Procédé pour fixer de manière amovible une partie primaire (210) d'un moteur linéaire (200) à un chariot (310), comprenant les étapes suivantes :
- la fourniture d'un système de moteur linéaire qui comprend :
un dispositif d'interface (100) avec une section de montage (110), au moins une section d'insertion (120a, 120b) et au moins un dispositif de blocage (140a, 140b) ;
le moteur linéaire (200) avec la partie primaire (210) et une partie secondaire (220), la partie primaire (210) du moteur linéaire (200) étant montée sur la section de montage (110) du dispositif d'interface (100), et
le chariot (310) avec au moins une section de réception (320a, 320b) ;
- l'insertion de l'au moins une section d'insertion (120a, 120b) du dispositif d'interface (100) dans l'au moins une section de réception (320a, 320b) du chariot (310) le long d'une direction axiale (Rx) du moteur linéaire, et
- l'actionnement de l'au moins un dispositif de blocage (140a, 140b) pour bloquer de manière amovible l'au moins une section d'insertion (120a, 120b) dans l'au moins une section de réception (320a, 320b) par coincement,
- le dispositif de blocage comprenant au moins une cale (150a, 150b) et au moins une vis (160a, 160b) qui sont agencées de manière mobile par rapport au dispositif d'interface (100), de telle sorte que la cale (150a, 150b) peut être déplacée par rapport au dispositif d'interface en actionnant la vis (160a, 160b),
**caractérisé en ce que**
la cale (150a, 150b) peut être déplacée parallèlement à la direction axiale (Rx) en actionnant la vis (160a, 160b) et est configurée pour provoquer un coincement de la section d'insertion (120a, 120b) dans une deuxième direction (Rz) différente de la direction axiale (Rx).
